# EUROPÄISCHE PATENTANMELDUNG

(11) **EP 0 931 443 A2**
(43) Veröffentlichungstag der Anmeldung: **28.07.1999**
(21) Anmeldenummer: 98124106.0
(22) Anmeldetag: 18.12.1998
(51) Int. Cl.: A01C 15/04

(54) **Verteilmaschine**

(30) Priorität: 23.01.1998 DE 19802534
(71) Anmelder: Amazonen-Werke H. Dreyer GmbH & Co. KG, D-49205 Hasbergen (DE)
(72) Erfinder: Kemper, Martin Dipl.-Ing., 49205 Hasbergen (DE); Schanzenbach, Volker Dipl.-Ing. agr., 49170 Hagen a.T.W. (DE)

(57) **Zusammenfassung**

Verteilmaschine mit einem Vorratsbehälter (4), zumindest einem Dosierorgan (7) und zumindest einem einen Luftstrom erzeugenden Gebläse (13), wobei zumindest ein Teil des Luftstromes an den Dosierorganen (7) vorbeigeleitet wird.

## Beschreibung

Die Erfindung betrifft eine Verteilmaschine gemäß des Oberbegriffes des Patentanspruches 1.

Eine derartige Verteilmaschine ist beispielsweise durch die DE-OS 38 03 264 bekannt. Diese Verteilmaschine weist einen Düngervorratsbehälter auf, von dem aus der Dünger über Dosierorgane, die ein Dosiergehäuse, in welchem jeweils rotierend angetriebene Dosierräder angeordnet sind, aufweisen, Ausbringorganen zugeleitet wird. Weiterhin ist hinter dem Vorratsbehälter eine Einzelkornsämaschine mit Einzelkornsäaggregaten angeordnet, welche von einem Sauggebläse mit Unterdruck beaufschlagt werden. Desweiteren sind an der Auslaßseite des Unterdruckgebläses Luftleitungen angeschlossen, die an den zu den äußeren Düngerscharen führenden Förderleitungen angeschlossen sind, damit der Dünger den an den Auslegern angeordneten Düngerscharen zugeleitet werden kann.

Es hat sich gezeigt, daß insbesondere bei feuchtem Dünger die Dosierrader der Dosierorgane, insbesondere beim Ausbringen von feuchten Düngern, sehr schnell verkleben.

Der Erfindung liegt die Aufgabe zugrunde, die Neigung des Anbackens von Dünger an den Dosierrädern bzw. dem Dosiergehäuse des Dosierorgans mit einfachen Mitteln erheblich zu reduzieren.

Diese Aufgabe wird erfindungsgemäß durch das kennzeichnende Merkmal des Anspruches 1 gelöst. Versuche haben gezeigt, daß in überraschend einfacher Weise durch eine einfache Vorbeileitung des Luftstromes an den Dosierorganen das Anbacken von Dünger bzw. Düngerteilen erheblich reduziert wird. Der Luftstrom wirkt in trockender Weise, so daß die Neigung des Anbackens erheblich herabgesetzt wird.

Eine besonders gute Zuleitung des Luftstromes zu den Dosierorganen wird dadurch erreicht, daß dem Dosierorgan ein Trocknungsgehäuse zugeordnet ist, und daß der Luftstrom über das Trocknungsgehäuse dem Dosierorgan zugeleitet wird. Hierdurch ist eine gezielte Zuleitung des Luftstromes möglich. Darüber hinaus wird eine effektive Steuerung und Leitung des Luftstromes erreicht.

In einer Ausführung, bei dem das Gebläse als Unterdruckgebläse ausgebildet ist, ist vorgesehen, daß die dem Dosierorgan und/oder dem Trocknungsgehäuse zugeordnete Luftleitung an der Druckseite des Druckgebläses angeschlossen ist.

Eine Verbesserung zum Verhindern des Anbackens von Düngerteilen an Teilen des Dosierorgans kann noch dadurch erreicht werden, daß der Leitung, über welche der Luftstrom den Dosierorganen und/oder dem Trocknungsgehäuse zugeleitet wird, eine Heizung zugeordnet ist.

Insbesondere hat sich gezeigt, daß die aus dem Auslaß des Unterdruckgebläses austretende Luft bereits erwärmt ist und so besonders wirksam das Dosierorgan 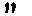 trocknen" bzw. trocken halten kann.

Um auch das Anbacken von Dünger oder Düngerteilen in den Leitungen, die von den Dosierorganen zu den Düngerausbringelementen, beispielsweise Düngerscharen führen, zu reduzieren, ist vorgesehen, daß die Trocknungsluft zumindest teilweise derart geleitet wird, daß sie über die zu den Ausbringorganen führenden Leitung entweicht bzw. abgeführt wird. Hierdurch wird ein Trockenhalten der Düngerleitungen in einfacher Weise erreicht.

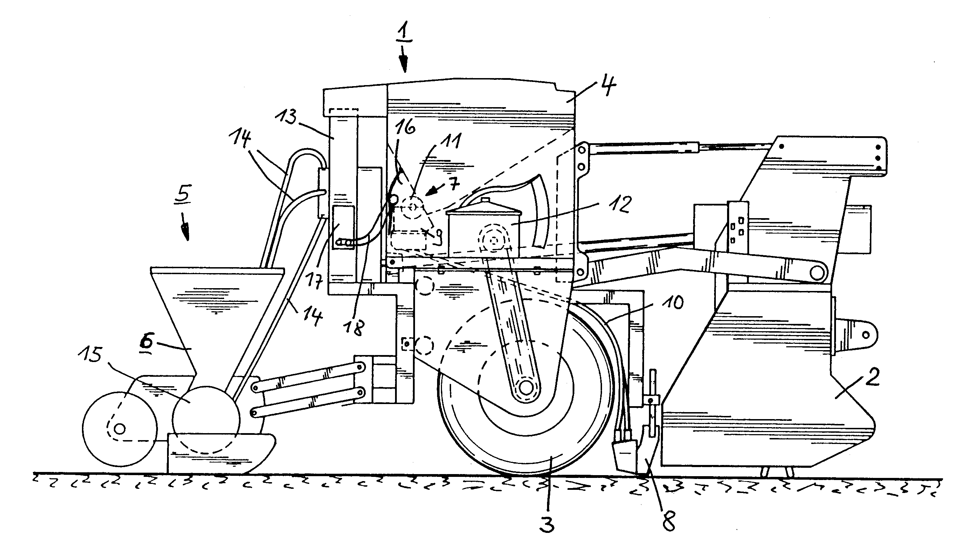

Weitere Einzelheiten der Erfindung sind der Beispielsbeschreibung und der Zeichnung zu entnehmen. Die Zeichnung zeigt
eine Verteilmaschine in Seitenansicht und in Prinzipdarstellung.

Die Verteilmaschine 1 ist Bestandteil einer Bestellkombination, bestehend aus einem Bodenbearbeitungsgerät 2, einem auf einer Nachlaufwalze 3 aufgesattelten Düngerbehälter 4 und einer Einzelkornsämaschine 5 mit Einzelkornsäaggregaten 6.

Der Düngerbehälter 4 weist in seinem unteren Bereich beabstandet zueinander angeordnete Dosierorgane 7 auf, wobei vorzugsweise jedem Düngerausbringelement 8, welches als Düngerschar ausgebildet ist, ein Dosierorgan 7 zugeordnet ist. Von jedem Dosiergehäuse 9 des Dosierorgans 7 führt jeweils eine Leitung 10 zu einem Düngerausbringelement 8.

Das Dosierorgan 7 weist ein in einem Dosiergehäuse 9 angeordnetes Dosierrad 11 auf, welches in einstellbarer Drehzahl von einer Kraftquelle, der Bodenwalze 3, über Drehzahlregulierungsmitteln, beispielsweise einem Einstellgetriebe 12, angetrieben wird.

Hinter der Nachlaufwalze 3 ist die Einzelkornsämaschine 5 mit den Einzelkornsäaggregaten 6 angeordnet. Desweiteren ist hinter dem Düngerbehälter 4 das Gebläse 13, welches von einer Kraftquelle angetrieben wird, angeordnet. Das Gebläse 13 ist als Sauggebläse ausgebildet, so daß über die Leitungen 14 die Vereinzelungsorgane 15 der Einzelkornsäaggregate 6 mit Unterdruck beaufschlagt werden.

Den Dosierorganen 7 ist jeweils ein Trocknungsgehäuse 16 zugeordnet. Diese Trocknungsgehäuse 16 können das Dosierorgan 7 bzw. das Dosiergehäuse 9 des Dosierorgans 7 zumindest teilweise umschließen.

Zwischen dem Luftauslaß 17 des als Sauggebläse ausgebildeten Gebläse 13 ist zumindest eine Leitung 18 angeordnet, die dem Trocknungsgehäuse 16 zumindest einen Teil des ausströmenden Luftstromes zuleitet. Dieser Luftstrom wird über das Trocknungsgehäuse 16 an den Dosierorganen 7 derart vorbeigeleitet, so daß der Luftstrom an dem Dosierrad 11 vorbeistreicht bzw. das Dosierorgan 7 und das Dosierrad 11 zumindest teilweise umströmt.

Hierbei kann dann der Luftstrom über das Trocknungsgehäuse 16 und das Dosiergehäuse 9 derart geleitet werden, daß zumindest ein Teil des Luftstromes, der als Trocknungsluft dient, derart geleitet wird, daß sie über den von den Dosierorganen 7 zu den Ausbringorganen 8 führenden Leitungen 10 entweicht und abgeführt wird. Hierdurch wird auch das Innere der jeweiligen Leitung 10 getrocknet.

Durch den Luftstrom, der das Dosierrad 11 und das Dosiergehäuse 9 umströmt, wird eine Trocknung des Dosierorgans 7 erreicht, so daß die Neigung des Anbackens von Dünger oder Düngerteilchen an den Teilen des Dosierorgans 7 erheblich reduziert bzw. in manchen Fällen sogar völlig verhindert wird. Der Leitung 18 bzw. dem Trocknungsgehäuse 16 kann eine nicht dargestellte Heizung zum Erwärmen der Luft zugeordnet sein.

## Patentansprüche

1. Verteilmaschine mit einem Vorratsbehälter, zumindest einem Dosierorgan und zumindest einem einen Luftstrom erzeugenden Gebläse (13), dadurch gekennzeichnet, daß zumindest ein Teil des Luftstromes an den Dosierorganen (7) vorbeigeleitet wird.

2. Verteilmaschine nach Anspruch 1, wobei das Dosierorgan (7) ein rotierend angetriebenes Dosierrad (11) aufweist, dadurch gekennzeichnet, daß der Luftstrom an dem Dosierrad (11) vorbeigeleitet wird.

3. Verteilmaschine nach einem oder mehreren der vorstehenden Ansprüche, dadurch gekennzeichnet, daß dem Dosierorgan (7) ein Trocknungsgehäuse (16) zugeordnet ist, daß der Luftstrom über das Trocknungsgehäuse (16) dem Dosierorgan (7) zugeleitet wird.

4. Verteilmaschine nach einem oder mehreren der vorstehenden Ansprüche, dadurch gekennzeichnet, daß das Gebläse (13) als Unterdruckgebläse ausgebildet ist, und die dem Dosierorgan (7) und/oder dem Trocknungsgehäuse (16) zugeordnete Luftleitung (18) an der Druckseite des Unterdruckgebläses (13) angeschlossen ist.

5. Verteilmaschine nach einem oder mehreren der vorstehenden Ansprüche, dadurch gekennzeichnet, daß der Leitung (18), über welche der Luftstrom dem Dosierorgan (7) und/oder dem Trocknungsgehäuse (16) zugeleitet wird, eine Heizung zugeordnet ist.

6. Verteilmaschine nach einem oder mehreren der vorstehenden Ansprüche, dadurch gekennzeichnet, daß der Luftstrom derart dem Dosierorgan (7) zugeleitet wird, daß der Luftstrom das Dosierorgan (7) und/oder das Dosierrad (11) zumindest teilweise umströmt.

7. Verteilmaschine nach einem oder mehreren der vorstehenden Ansprüche, dadurch gekennzeichnet, daß die Trocknungsluft zumindest teilweise derart geleitet wird, daß sie über die zu den Ausbringorganen (8) führenden Leitungen (10) entweicht bzw. abgeführt wird.
